# EUROPÄISCHE PATENTANMELDUNG

(11) **EP 2 298 069 A2**
(43) Veröffentlichungstag der Anmeldung: **23.03.2011**
(21) Anmeldenummer: 10177938.7
(22) Anmeldetag: 21.09.2010
(51) Int. Cl.: A01K 1/01

(54) **Vorrichtung zum Trennen von Grobanteilen und Feinteilen, insbesondere von festem Mist und Einstreumaterial bei der Stallpflege**

(30) Priorität: 21.09.2009 DE 202009011035 U
(71) Anmelder: EUROBRIGHT Technical Development and Facility Management Ltd., 1503 Silema (MT)
(72) Erfinder: Rottmar, Manfred, 1150, Wien (AT)
(74) Vertreter: Menges, Rolf

(57) **Zusammenfassung**

Bei einer Vorrichtung zum Trennen von Grobanteilen und Feinteilen, insbesondere von festem Mist und Einstreumaterial bei der Stallpflege, sind eine mit Durchlassöffnungen versehene Aufnahmeeinrichtung (1) und eine der Aufnahmeeinrichtung (1) zugeordnete Rüttelanordnung (2) vorhanden. Die Aufnahmeeinrichtung (1) weist einen Sammelbehälter (3) auf und ist an einem verfahrbaren Wagen (4) aufsetzbar montierbar. Der Sammelbehälter (3) ist nach oben hin offen und weist an drei Seiten hochgezogene Randbereiche (5, 6, 7) auf, wobei ein offener Randbereich (8) des Sammelbehälters (3) gegen eine Aufnahmemulde (9) des verfahrbaren Wagens (4) hin gerichtet ist.

## Beschreibung

Die Erfindung betrifft eine Vorrichtung zum Trennen von Grobanteilen und Feinteilen, insbesondere von festem Mist und Einstreumaterial bei der Stallpflege, mit einer mit Durchlassöffnungen versehenen Aufnahmeeinrichtung und einer dieser Aufnahmeeinrichtung zugeordneten Rüttelanordnung.

Es ist bereits eine kratzbodenvibrationssiebartige Vorrichtung (DE 198 04 117 A1) zur Trennung von Fest- und Flüssigstoffen aus kommunalen, landwirtschaftlichen und industriellen Reststoffgemischen mit hohem Flüssigkeitsanteil bekannt geworden. Es muss hier auf jeden Fall eine Zulaufringleitung vorhanden sein, um das Reststoffgemisch zuzuführen, und außerdem ist eine solche Zubringung nur bei Reststoffgemischen mit wirklich hohem Flüssigkeitsanteil einsetzbar.

Ferner ist eine Vorrichtung zum Trennen von festem Mist und Einstreumaterial in Form von einer mit einem Handhabungsstiel versehenen Aufnahmeschaufel bekannt, welche Durchlassöffnungen aufweist (WO 2007/127261). Der Aufnahmeschaufel ist eine Vibrationsvorrichtung zugeordnet. Mit dieser Vorrichtung kann das Gemisch von festem Mist und Einstreumaterial vom Stallboden aufgenommen werden, worauf dann diese Vorrichtung in gewissem Abstand vom Boden zu halten ist, so dass bei Einwirkung der Vibrationsvorrichtung das lose Einstreumaterial wieder durch die Durchlassöffnungen der Aufnahmeschaufel nach unten fallen kann. Der feste Mist (Pferdemist) bleibt hingegen in der Aufnahmeschaufel, so dass der in der Aufnahmeschaufel verbleibende Mist entsorgt werden kann. Die Arbeit mit einer solchen Schaufel ist relativ mühsam und vor allem zeitaufwendig, da immer nur sehr kleine Mengen bearbeitet werden können und dabei stets von der Bedienungsperson die Vorrichtung samt dem zu trennenden Gemisch in angehobener Stellung getragen werden muss.

Eine ähnliche Vorrichtung ist auch schon zum Trennen von Katzenkot und Einstreumaterial bekannt geworden (US 6 022 058 A). Auch hier sind bezüglich Handhabung und Arbeitsaufwand die gleichen Nachteile gegeben, wobei sich diese Nachteile natürlich in einem Stall mit Tieren viel mehr auswirken.

Die Erfindung hat sich daher zur Aufgabe gestellt, eine Vorrichtung der eingangs genannten Art zu schaffen, welche einfach zu handhaben ist und mit welcher ohne Unterbrechungen und Zuwarten eine fortlaufende Trennung eines Gemisches in zwei Hauptbestandteile ermöglicht wird.

Erfindungsgemäß gelingt dies dadurch, dass die Aufnahmeeinrichtung einen Sammelbehälter aufweist und an einen verfahrbaren Wagen aufsetzbar montierbar ist, wobei der Sammelbehälter nach oben hin offen ist und an drei Seiten hochgezogene Randbereiche aufweist, wobei ein offener Randbereich des Sammelbehälters gegen eine Aufnahmemulde des verfahrbaren Wagens hin gerichtet ist.

Mit einer solchen Ausbildung der Vorrichtung kann ein ständiges Aufladen des zu trennenden Gemisches erfolgen, weil eben eine Aufnahmemulde vorgesehen ist, welche Vibrationsbewegungen ausführt und für die Zubringung mittels einer Gabel oder einer Schaufel frei zugänglich ist. Es erfolgt eine ständige Trennung von festem Mist und Einstreumaterial, wobei das lose Einstreumaterial zurück auf den Boden fallen kann und der feste Mist in die Aufnahmemulde des verfahrbaren Wagens geleitet wird. Es kann somit ein einfaches Zubringen des zu trennenden Gemisches stattfinden und außerdem ein wirkungsvolles Trennen in feste Grobanteile (Pferdemist) und Feinteile (Einstreumaterial) erzielt werden.

Ferner wird vorgeschlagen, dass der Sammelbehälter spitzwinklig gegen die Aufnahmemulde des Wagens geneigt ist. Dadurch wird infolge der Vibration bzw. des Rüttelvorganges und der Neigung der Aufnahmemulde ein rasches und effizientes Entleeren der festen Grobanteile (Pferdemist) in die Aufnahmemulde des verfahrbaren Wagens erreicht.

Um ein optimales Anpassen an die Konsistenz der Grobanteile und der Feinanteile des zu trennenden Gemisches zu ermöglichen, wird vorgesehen, dass die Neigung des Sammelbehälters verstellbar und fixierbar ist.

Um eine möglichst gute Wirkung der Vibration zu bewirken, wird vorgeschlagen, dass der Sammelbehälter frei beweglich an einem Rahmengestell der Aufnahmeeinrichtung aufgehängt ist. Dadurch können die Schwingungen der Vibration voll ausgeführt werden.

In diesem Zusammenhang ist es von Vorteil, wenn der Sammelbehälter über elastische und/oder federnde Elemente am Rahmengestell aufgehängt ist.

Eine einfache konstruktive Gestaltung ist dann gegeben, wenn der verfahrbare Wagen als eine Art Schubkarre mit einer Aufnahmemulde und einem Fahrgestell, welches vorzugsweise ein Räderpaar und zwei Auflagestützen aufweist, ausgeführt ist. Der verfahrbare Wagen kann für verschiedenste Zwecke eingesetzt werden und eignet sich in besonderer Weise auch zum Anbringen und zum Zusammenwirken mit der erfindungsgemäßen Vorrichtung.

In diesem Zusammenhang wird in vorteilhafter Weise vorgesehen, dass das Fahrgestell neben den Auflagestützen zwei annähernd parallel zueinander verlaufende Verlängerungsrohre zur Handhabung und zum Verschieben des verfahrbaren Wagens aufweist, wobei an den Verlängerungsrohren des Fahrgestells die Aufnahmeeinrichtung mit dem Sammelbehälter abgestützt und fixierbar ist. Es ist daher auch eine einfache Montage der Aufnahmeeinrichtung gleich in der richtigen Lage möglich.

Ferner wird vorgeschlagen, dass der Sammelbehälter wannen- oder muldenartig mit an wenigstens drei Begrenzungsseiten nach oben gezogenen Randbereichen ausgebildet ist. Es ist daher die Möglichkeit einer entsprechenden Befüllung, aber auch eine gute Ableitmöglichkeit für die festen Grobanteile (Pferdemist) geschaffen worden.

Damit die Vorrichtung auch ortsunabhängig eingesetzt werden kann, wird nach einer weiteren Ausgestaltung vorgeschlagen, dass am Fahrgestell des verfahrbaren Wagens oder am Rahmengestell ein mit der Rüttelanordnung ausgestatteter Elektromotor und gegebenenfalls eine Batterie montiert sind.

Weiters kann vorgesehen werden, dass am Rahmengestell der Aufnahmeeinrichtung eine Haltestange verschwenkbar anschließt, welche zur Veränderung der Neigung des Sammelbehälters in eine Führungsschiene mit mehreren Einraststellen eingreift. Es ist dadurch eine einfache Konstruktion geschaffen worden, um die Neigung der Aufnahmeeinrichtung der Konsistenz des zu trennenden Materials anzupassen.

In diesem Zusammenhang sieht eine besondere Konstruktion vor, dass der Sammelbehälter zum Verfahren des fahrbaren Wagens und auch zum Entleeren der Aufnahmemulde in eine annähernde Vertikallage zwischen den Verlängerungsrohren des Fahrgestells einschwenk- und in dieser Stellung arretierbar ist. Der Sammelbehälter ist also in eine Nichtgebrauchsstellung verschwenkbar.

Damit die Vibrationen bzw. der Rüttelvorgang nicht in übermäßiger Weise auch auf den verfahrbaren Wagen übertragen wird, ist vorgesehen, dass im Bereich der Verbindung zwischen dem verfahrbaren Wagen und der Aufnahmeeinrichtung vibrationshemmende Mittel eingesetzt sind.

Weitere erfindungsgemäße Merkmale und besondere Vorteile werden in der nachstehenden Beschreibung anhand der Zeichnung noch näher erläutert. Es zeigen:

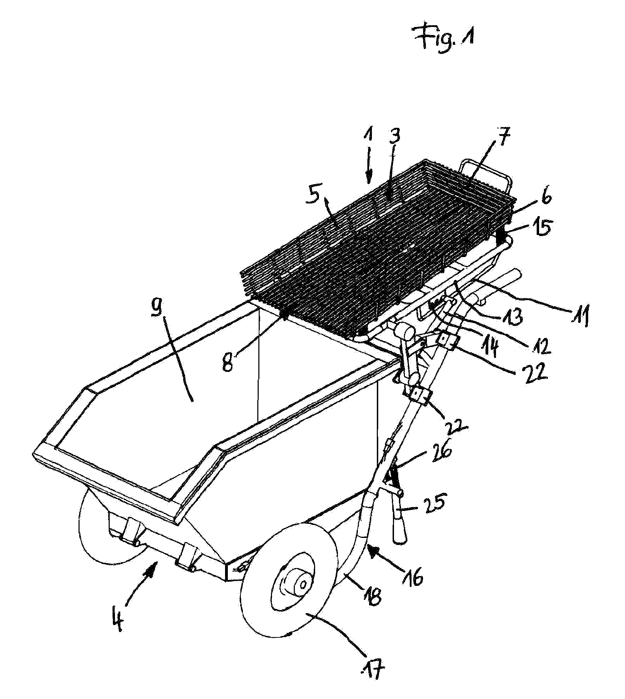

- Fig. 1: eine erfindungsgemäße Vorrichtung zusammen mit einem verfahrbaren Wagen in Schrägsicht einschließlich der Befestigung zwischen der Vor- richtung und dem verfahrbaren Wagen;
- Fig. 2: eine Seitenansicht der Vorrichtung in montierter Stellung an einem verfahrbaren Wagen;

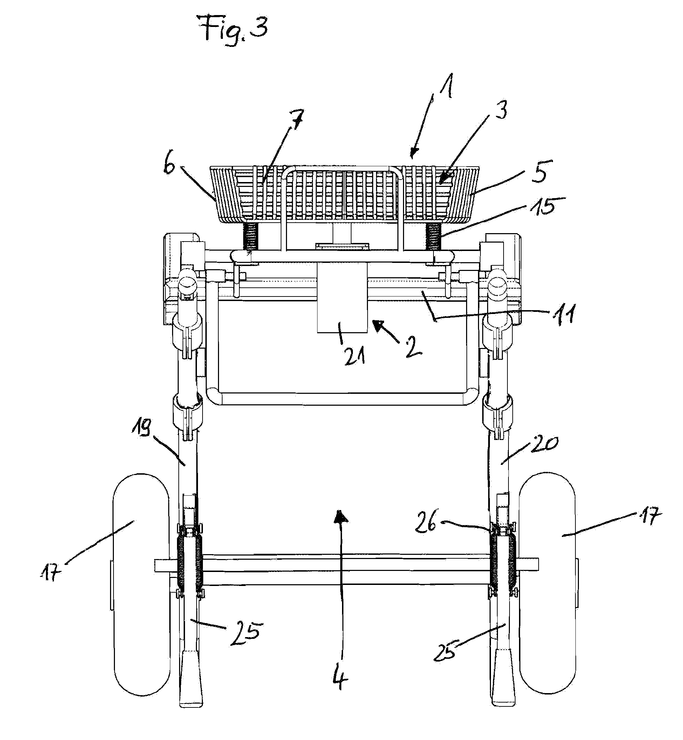

- Fig. 3: eine Ansicht der Anordnung aus Vorrichtung und Wagen von hinten.

Die erfindungsgemäße Vorrichtung ist im speziellen zur Reduzierung des Arbeitsaufwandes und zur längeren Nutzbarmachung von Tiereinstreu bei der Stallpflege bestimmt. Daraus resultierend können die Kosten für Arbeit und Material reduziert werden. Die Reduzierung des Materialverbrauchs ist auch umweltrelevant. Nachwachsende Energierohstoffe wie Stroh und Holz können dadurch effizienter genutzt werden. Durch die Möglichkeit der Trennung von Einstreu von festem Pferdemist können die zwei Fraktionen gezielt wiederverwertet werden.

Dieser Vorrichtung wird dort eingesetzt, wo in der Stallhaltung Einstreu in zerkleinerter Form verwendet wird. Die Länge der Einstreuteilchen soll dabei in der Regel nicht mehr als 30 mm betragen.

Es können dabei Einstreuprodukte aus folgenden Rohstoffen bearbeitet werden:
Rohstoff Stroh: Jegliche Art von Stroh, das, mit welchem Verfahren auch immer, zerkleinert ist, wie z.B. Häckselstroh mit mechanisch aufgeschlossener Oberflächenstruktur der Ligninschicht, Häckselstroh allgemein oder aber Strohmehl allgemein.
Rohstoff Holz: Jegliche Art von Holzspänen, die, mit welchem Verfahren auch immer, zerkleinert sind, wie z.B. Hobelspäne, Sägespäne in jeglicher Form oder Sägemehl in jeglicher Art.
Sandige Rohstoffe: Jegliche Art von Kleinpartikeleinstreu hergestellt aus Sand, Torf, Erde oder sonstigen Rohstoffen und Granulaten, und zwar unabhängig von ihrer Zusammensetzung.

Die erfindungsgemäße Vorrichtung ist auch für jegliche andere Filtrierung einsetzbar, wo Grobanteile von Feinmaterial getrennt werden sollen.

Bei der vorliegenden Erfindung ist eine Vorrichtung zum Trennen von Grobanteilen und Feinteilen, insbesondere von festem Mist und Einstreumaterial bei der Stallpflege, vorgesehen, welche mit einer mit Durchlassöffnungen versehenen Aufnahmeeinrichtung 1 und einer dieser Aufnahmeeinrichtung 1 zugeordneten Rüttelanordnung 2 ausgestattet ist. Die Aufnahmeeinrichtung 1 weist einen Sammelbehälter 3 auf und ist an einen verfahrbaren Wagen 4 aufsetzbar montierbar. Der Sammelbehälter 3 ist wannen- oder muldenartig nach oben hin offen ausgeführt ist und weist an drei Seiten hochgezogene Randbereiche 5, 6, 7 auf. Ein offener Randbereich 8 des Sammelbehälters 3 ist gegen eine Aufnahmemulde 9 des verfahrbaren Wagens 4 gerichtet.

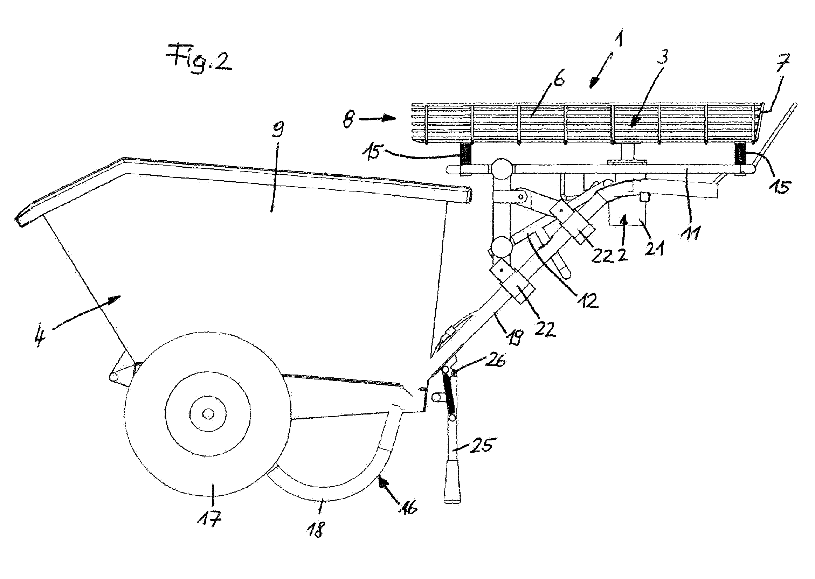

Der Sammelbehälter 3 ist dabei spitzwinklig gegen die Aufnahmemulde 9 des Wagens 4 geneigt. Vorteilhaft ist die Neigung des Sammelbehälters 3 verstellbar und zweckmäßig auch in verschiedenen Neigungsstellungen fixierbar. Eine besondere Ausführung ist der Fig.2 zu entnehmen. Die Aufnahmeneinrichtung 1 ist mit einem Rahmengestell 11 ausgestattet, an der eine Haltestange 12 verschwenkbar anschließt. Diese Haltestange 12 dient zur Veränderung der Neigung des Sammelbehälters 3 und greift dazu in eine Führungsschiene 13 mit mehreren Einraststellen 14 ein. Der Sammelbehälter 3 kann zum Verfahren des fahrbaren Wagens 4 und auch zum Entleeren der Aufnahmemulde 4 in eine annähernde Vertikallage zwischen den Verlängerungsrohren 19, 20 des Fahrgestells 16 eingeschwenkt werden und ist auch in dieser Stellung arretierbar.

Der Sammelbehälter 3 ist zumindest annähernd frei beweglich an einem Rahmengestell 11 der Aufnahmeeinrichtung 1 aufgehängt. Dazu ist vorteilhaft der Sammelbehälter 3 über elastische und/oder federnde Elemente 15 am Rahmengestell 11 aufgehängt.

Der verfahrbare Wagen 4 ist als eine Art Schubkarre mit einer Aufnahmemulde 9 und einem Fahrgestell 16 ausgeführt, wobei das Fahrgestell 16 vorzugsweise ein Räderpaar 17 und zwei Auflagestützen 18 aufweist. Zusätzlich können noch federnde Abstützfüße 25 vorgesehen werden, die dem verfahrbaren Wagen 4 bei der Arbeit mit der Vorrichtung zusätzlichen Halt verleihen. Die Abstützfüße können um die Achse 26 verschwenkbar angeordnet sein. Dadurch ist auch eine ausreichende Standfestigkeit des Wagens 4 beim Beladen und auch beim Betrieb mit der Rütteleinrichtung 2 gegeben. Der Aufnahmeeinrichtung 1 kann auch auf andere baugleiche oder bauähnliche Schubkarren montiert werden.

Das Fahrgestell 16 weist neben den Auflagestützen 18 zwei annähernd parallel zueinander verlaufende Verlängerungsrohre 19, 20 zur Handhabung und zum Verschieben des verfahrbaren Wagens 4 auf. An den Verlängerungsrohren 19, 20 des Fahrgestells 16 ist die Aufnahmeeinrichtung 1 mit dem Sammelbehälter 3 abgestützt und fixierbar. Im Bereich der Verbindung 22 zwischen dem verfahrbaren Wagen 4 bzw. dem Fahrgestell 16 und der Aufnahmeeinrichtung 1 werden in vorteilhafter Weise vibrationshemmende Mittel eingesetzt.

Am Fahrgestell 16 des verfahrbaren Wagens 4 oder am Rahmengestell 11 ist ein mit einer Rütteleinrichtung ausgestatteter Elektromotor 21 und gegebenenfalls eine Batterie montiert. Die Stromversorgung für den Elektromotor 21 an der Aufnahmeeinrichtung erfolgt zweckmäßig über zwei an der Unterseite des Fahrgestells 16 angebrachten 12 Volt Batterien. Zwei Halterungen können zur Befestigung von zwei wieder aufladbaren 12 Volt Batterien mit Steckkontakten für die Ladestation am Fahrgestell vorhanden sind. Die Anordnung und Position der Batterien ist aus Gründen der Stabilität und des Gleichgewichts gewählt. Sie befinden sich auf Höhe der Achse unterhalb der zum Fahrgestell 16 gehörenden Aufnahmemulde 9.

Die Aufnahmemulde 9 kann aus Kunststoff (Kunststoffwanne) oder aus rostfreiem Stahl oder aber auch aus Aluminium gefertigt sein und ihre Form entspricht den speziellen Anforderungen, die aus der Konzeption der aufgesetzten Aufnahmeeinrichtung 1 resultieren.

Die erfindungsgemäße Vorrichtung wird mit der aufgesetzten Aufnahmeeinrichtung so zum Stellplatz gefahren, dass das Feinmaterial, bei aufgeklapptem Sammelbehälter 3 und eingeschaltetem Rütteln problemlos zum Boden fallen kann. Der Sammelbehälter 3 kann in mehreren Positionen ausgerichtet werden. Während die gesamte Einheit (Wagen und Aufnahmevorrichtung) bewegt wird, befindet sich der Sammelbehälter in annähernd vertikaler Position an der Rückseite der Aufnahmemulde 9. Der Sammelbehälter 3 wird mittels der an der Unterseite angebrachten mobilen, verschiebbaren Haltestange 12, die in die Führungsschiene 13 einrastet, in die notwendige Schräglage gebracht.

Der Rütteleinrichtung 2 wird nun eingeschaltet. Durch den unterhalb des Sammelbehälters 3 angebrachten Elektromotor 21 wird der Sammelbehälter 3 in Schwingungen versetzt. Der Sammelbehälter 3 ist an der Oberseite, an jeder Ecke mit vier elastischen und/oder federnden Elementen 15 am Traggestell 11 des Sammelbehälters 3 befestigt. Diese die Aufhängungen bildenden Elemente 15 sind zweckmäßig aus einem speziellen Federstahl gefertigt und ermöglichen das Schwingen des Sammelbehälters 3. Durch die Schräglage können die Grobanteile bei eingeschalteter Rütteleinrichtung 2 durch den zur Aufnahmemulde 9 hin offenen Sammelbehälter 3 in die Aufnahmemulde 9 befördert werden.

Die mit Tierkot kontaminierte Einstreu wird nun mittels Spänegabel oder herkömmlicher Mistschaufel auf den Sammelbehälter 3 gelegt. Fast die gesamten am Mist anhaftenden und mit der Gabel oder Schaufel mitgeführten Einstreuteile fallen durch das Rütteln des Sammelbehälters zurück auf den Boden. Der Anteil an gefilterten Grobteilen des Mistes fällt über die Schräge des Sammelbehälters 3 in die davor befindliche Aufnahmemulde.

Durch die spezielle Konstruktion der Aufnahmemulde 9 ist ein leichtes auskippen des Inhaltes nach vorne möglich. Während des Ausleerens wird der Sammelbehälter 3 so weggeklappt, dass er sich wieder an der Rückseite der Aufnahmemulde 9 in annähernd vertikaler Lage befindet. Die Arretierung erfolgt mittels der Haltestange 12 und der Führungsschiene 13.

Das Fahrgestell 16 kann auch mit einer Aufnahmemulde aus nichtrostendem Stahl bestehen. Die Achse, zwei Radaufhängungen, zwei Felgen, zwei Gummireifen und zwei Formrohren sind in entsprechender Ausführung eingesetzt. Dieser mobile Wagen 4 ist der tragende Konstruktionsteil zur Befestigung sämtlicher anderen Module der gesamten Vorrichtung.

Zwei gebogene Formrohre, welche auch die Verlängerungsrohre 19, 20 bilden, sind vorteilhaft verzinkt und pulverbeschichtet ausgeführt und sind jeweils an der Außenseite mit dem Fahrgestell 16 verschraubt. Die Unterkonstruktion der Aufnahmeeinrichtung 1, also das Haltegestell 11, besteht ebenfalls aus einem Rohrrahmen mit vier angesetzten vertikalen Formrohren, wobei diese ebenfalls oberflächenvergütet ausgebildet sein können.

Der Sammelbehälter 3 ist vorteilhaft als Drahtkorb aus Stahl gefertigt, der entweder kunststoffbeschichtet, verchromt oder verzinkt ist oder aber aus Chromstahl hergestellt ist.

An der Oberseite des Elektromotors 21 ist ein Exzenter aufgesetzt, der mit dem Sammelbehälter 3 verbunden ist. Die Oberseite des Elektromotors 21 wird durch eine auf der Innenseite des Sammelbehälters angebrachte, runde Edelstahlscheibe geschützt. Der Exzenter bestimmt den Rüttelvorgang.

## Patentansprüche

1. Vorrichtung zum Trennen von Grobanteilen und Feinteilen, insbesondere von festem Mist und Einstreumaterial bei der Stallpflege, mit einer mit Durchlassöffnungen versehenen Aufnahmeeinrichtung (1) und einer der Aufnahmeeinrichtung (1) zugeordneten Rüttelanordnung (2), **dadurch gekennzeichnet, dass** die Aufnahmeeinrichtung (1) einen Sammelbehälter (3) aufweist und an einem verfahrbaren Wagen (4) aufsetzbar montierbar ist, wobei der Sammelbehälter (3) nach oben hin offen ist und an drei Seiten hochgezogene Randbereiche (5, 6, 7) aufweist, wobei ein offener Randbereich (8) des Sammelbehälters (3) gegen eine Aufnahmemulde (9) des verfahrbaren Wagens (4) hin gerichtet ist.

2. Vorrichtung nach Anspruch 1, **dadurch gekennzeichnet, dass** der Sammelbehälter (3) spitzwinklig gegen die Aufnahmemulde (9) des Wagens (4) geneigt ist.

3. Vorrichtung nach Anspruch 2, **dadurch gekennzeichnet, dass** die Neigung des Sammelbehälters (3) verstellbar und fixierbar ist.

4. Vorrichtung nach Anspruch 1, **dadurch gekennzeichnet, dass** der Sammelbehälter (3) frei beweglich an einem Rahmengestell (11) der Aufnahmeeinrichtung (1) aufgehängt ist.

5. Vorrichtung nach Anspruch 4, **dadurch gekennzeichnet, dass** der Sammelbehälter (3) über elastische und/oder federnde Elemente (15) am Rahmengestell (11) aufgehängt ist.

6. Vorrichtung nach Anspruch 1, **dadurch gekennzeichnet, dass** der verfahrbare Wagen (4) als eine Art Schubkarre mit einer Aufnahmemulde (9) und einem Fahrgestell (16), welches vorzugsweise ein Räderpaar (17) und zwei Auflagestützen (18) aufweist, ausgeführt ist.

7. Vorrichtung nach Anspruch 6, **dadurch gekennzeichnet, dass** das Fahrgestell (16) neben den Auflagestützen (18) zwei annähernd parallel zueinander verlaufende Verlängerungsrohre (19, 20) zur Handhabung und zum Verschieben des verfahrbaren Wagens (4) aufweist, wobei an den Verlängerungsrohren (19, 20) des Fahrgestells (16) die Aufnahmeeinrichtung (1) mit dem Sammelbehälter (3) abgestützt und fixierbar ist.

8. Vorrichtung nach Anspruch 1, **dadurch gekennzeichnet, dass** der Sammelbehälter (3) wannen- oder muldenartig mit an wenigstens drei Begrenzungsseiten nach oben gezogenen Randbereichen (5, 6, 7) ausgebildet ist.

9. Vorrichtung nach einem der Ansprüche 1 bis 8, **dadurch gekennzeichnet, dass** am Fahrgestell (16) des verfahrbaren Wagens (4) oder am Rahmengestell (11) ein mit der Rüttelanordnung (2) ausgestatteter Elektromotor (21) und gegebenenfalls eine Batterie montiert sind.

10. Vorrichtung nach den Ansprüchen 3 und 4, **dadurch gekennzeichnet, dass** am Rahmengestell (11) der Aufnahmeeinrichtung (1) eine Haltestange (12) verschwenkbar anschließt, welche zur Veränderung der Neigung des Sammelbehälters (3) in eine Führungsschiene (13) mit mehreren Einraststellen (14) eingreift.

11. Vorrichtung nach Anspruch 10, **dadurch gekennzeichnet, dass** der Sammelbehälter (3) zum Verfahren des fahrbaren Wagens (4) und auch zum Entleeren der Aufnahmemulde (9) in eine annähernde Vertikallage zwischen den Verlängerungsrohren (19, 20) des Fahrgestells (16) einschwenk- und in dieser Stellung arretierbar ist.

12. Vorrichtung nach einem der vorstehenden Ansprüche, **dadurch gekennzeichnet, dass** im Bereich der Verbindung (22) zwischen dem verfahrbaren Wagen (4) und der Aufnahmeeinrichtung (1) vibrationshemmende Mittel eingesetzt sind.
